# EUROPÄISCHE PATENTANMELDUNG

(11) **EP 4 418 392 A2**
(43) Veröffentlichungstag der Anmeldung: **21.08.2024**
(21) Anmeldenummer: 24178758.9
(22) Anmeldetag: 11.06.2018
(51) Int. Cl.: H01M 10/0525

(54) **AKKUPACKVORRICHTUNG; HERSTELLUNGSVERFAHREN FÜR EINE AKKUPACKVORRICHTUNG**

(30) Priorität: 19.06.2017 DE 102017210210; 03.07.2017 DE 102017211263
(62) Teilanmeldung aus: 18733195.4
(71) Anmelder: Robert Bosch GmbH, 70442 Stuttgart (DE)
(72) Erfinder: Guenter, Friedhelm, 71576 Burgstetten (DE); Ebegoemeci, Erkan, 70771 Leinfelden-Echterdingen (DE); Engelmayer, Andreas, 80636 Muenchen (DE); Yesil, Mustafa Kemal, 71067 Sindelfingen (DE); Bantel, Christoph, 71254 Ditzingen (DE); Thaitchana Muruthi, Subramaniam Velalar, Butterworth, Penang (MY)

(57) **Zusammenfassung**

Die Erfindung betrifft eine Akkupackvorrichtung mit zumindest einer Akkuzelle, die zumindest einen Zellpol aufweist, mit einem Stromableiter, wobei der Zellpol mit dem Stromableiter in einem Anbindungsbereich stoffschlüssig verbunden ist, wobei der Anbindungsbereich zumindest eine Schweißnaht mit einem einzelnen Anfangspunkt und einem einzelnen Endpunkt aufweist, wobei die Schweißnaht über zumindest 90 % ihrer Länge, insbesondere ihrer gesamten Länge, eine gleichmäßige Breite aufweist, wobei die Schweißnaht sich und/oder eine weitere Schweißnaht nicht berührt und/oder kreuzt, wobei die Akkupackvorrichtung je Akkuzelle eine einzelne spiralförmige Schweißnaht oder zumindest zwei parallele, insbesondere geradlinig parallele, Schweißnähte aufweist.

## Beschreibung

### Stand der Technik

Akkupacks, die zum Betrieb von tragbaren Geräten vorgesehen sind, werden üblicherweise möglichst kompakt und gewichtssparend ausgelegt. Aus diesem Grund ist die Wandstärke von Zellpolen der Akkuzellen in solchen Akkupacks sehr gering und in der Regel in einem Bereich von wenigen Zehntel Millimetern. Damit die Akkuzellen mit elektrischen Kontakten verbunden werden können, werden die Zellpole der Akkuzellen mit Stromableitern stoffschlüssig verbunden. Gängiges Verhältnis zwischen der Wandstärke der Zellpole und der Dicke des Stromableiters bei derartigen Akkupacks liegt im Bereich von ca. 1.

Um die Wärmeentwicklung innerhalb des Akkupacks zu reduzieren, wird bevorzugt ein Stromableiter mit einem sehr geringen Widerstrand gewählt. Bekannt sind beispielsweise Stromableiter aus Ni oder aus Kupferlegierungen, die über ein Widerstandsschweißverfahren mit dem Zellpol verbunden werden. Aufgrund seines geringen Widerstands ist Kupfer ein besonders geeignetes Material für Stromableiter. Bei oben beschriebenen Akkupacks wird Kupfer allerdings nicht eingesetzt, da das Widerstandsschweißverfahren nicht geeignet ist, um Stromableiter aus Kupfer mit einer Dicke von über 0,1 mm mit derartig dünnen Zellpolen zu verbinden.

### Offenbarung der Erfindung

Die Erfindung betrifft eine Akkupackvorrichtung gemäß Anspruch 1.

Alternativ wird eine Akkupackvorrichtung mit zumindest einer Akkuzelle, die einen Zellpol aufweist, mit einem Stromableiter, wobei der Zellpol mit dem Stromableiter in einem Anbindungsbereich stoffschlüssig verbunden ist, wobei ein Verhältnis einer Wandstärke des Zellpols und einer Dicke des Stromableiters maximal 2,0 ist, und der Stromableiter aus Kupfer ausgebildet ist vorgeschlagen. Vorteilhaft wird beim Betrieb eines Akkupacks mit der erfindungsgemäßen Akkupackvorrichtung eine deutliche Verringerung der Wärmeentwicklung erzielt, was die Lebensdauer der Akkupackvorrichtung erhöht. Zudem wird vorteilhaft die maximal abrufbare Leistung erhöht. Weiterhin betrifft die Erfindung einen Akkupack, insbesondere einen Handwerkzeugmaschinenakkupack, mit einer Akkupackvorrichtung, wie zuvor beschrieben.

Der Akkupack weist bevorzugt ein Gehäuse auf, das über eine mechanische Schnittstelle lösbar mit einem externen Verbraucher oder einem Ladegerät verbindbar ist. Der externe Verbraucher kann insbesondere als ein tragbares Gerät ausgebildet sein. Vorzugsweise ist der externe Verbraucher als ein Gartengerät, wie beispielsweise ein Rasenmäher oder eine Heckenschere, als eine Handwerkzeugmaschine, wie beispielsweise ein Winkelschleifer, ein Schrauber, eine Bohrmaschine, ein Bohrhammer, etc. oder als ein Messwerkzeug, wie beispielsweise ein Laserentfernungsmessgerät, ausgebildet. Über die mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher lösbar ist. Des Weiteren umfasst der Akkupack zumindest eine Akkuzelle und eine elektrische Schnittstelle, über die die zumindest eine Akkuzelle mit dem Verbraucher elektrisch verbindbar ist. Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Der Zellpol ist vorzugsweise aus einem leitfähigen Metall ausgebildet, beispielhaft aus einem Tiefziehstahl. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen, ausgebildet. Die Akkuspannung des Ackupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind. Die elektrische Schnittstelle umfasst insbesondere zumindest zwei elektrische Kontaktelemente, die zur Übertragung von Energie ausgebildet sind. Alternativ oder zusätzlich kann die elektrische Schnittstelle ein sekundäres Ladespulenelement zur induktiven Ladung aufweisen. Zusätzlich kann die elektrische Schnittstelle weitere Kontaktelemente aufweisen, die dazu ausgebildet sind, zusätzliche Informationen, die vorzugsweise über die Elektronik ermittelt werden, an den Verbraucher zu übertragen. Dabei kann es sich beispielsweise um einen Ladezustand des Akkupacks, um eine Temperatur innerhalb des Akkupacks, um eine Codierung oder um eine Restkapazität des Akkupacks handeln. Es ist denkbar, dass die Elektronik den Lade- und/oder Entladevorgang des Akkupacks regelt oder zu steuert. Die Elektronik kann beispielsweise eine Leiterplatte, eine Recheneinheit, einen Transistor, einen Kondensator und/oder einen Speicher aufweisen. Die Elektronik kann zudem ein oder mehrere Sensorelemente aufweisen, beispielsweise zur Ermittlung der Temperatur innerhalb des Akkupacks. Die Elektronik kann alternativ oder zusätzlich ein Codierungselement, wie beispielsweise ein Codierungswiderstand, aufweisen.

Der Stromableiter ist insbesondere dazu ausgebildet, eine elektrische Verbindung zu den Zellpolen herzustellen. Vorzugsweise ist der Stromableiter elektrisch mit einem der elektrischen Kontaktelemente verbunden. Alternativ oder zusätzlich ist denkbar, dass der Stromableiter als Zellverbinder ausgebildet ist, der zumindest zwei Akkuzellen miteinander elektrisch verbindet. Der Stromableiter weist insbesondere eine Dicke von zumindest 0,1 mm, bevorzugt eine Dicke von zumindest 0,2 mm, besonders bevorzugt eine Dicke von zumindest 0,3 mm, auf. Der Stromableiter ist insbesondere aus einem Kupferblech geformt. Der Stromableiter ist vorzugsweise aus einem Kupfermaterial mit einem Kupferanteil von zumindest 98 % ausgebildet. Bevorzugt ist der Stromableiter aus Elektrolytkupfer mit einem Kupferanteil von zumindest 99,5 % ausgebildet. Insbesondere handelt es sich bei dem Material, aus dem der Stromableiter besteht, nicht um eine kupferhaltige Legierung. Der Stromableiter ist insbesondere einteilig ausgebildet.

Des Weiteren wird vorgeschlagen, dass das Verhältnis zwischen der Wandstärke des Zellpols und der Dicke des Stromableiters maximal 1,5, vorzugsweise maximal 1,0, bevorzugt maximal 0,8, ausgebildet ist. Ausgehend von einer gleichbleibenden Wandstärke des Zellpols werden durch eine Verkleinerung des Verhältnisses die Wärmeentwicklung und die Leistungsfähigkeit der Akkupackvorrichtung weiter verbessert. Die Dicke des Stromableiters liegt insbesondere in einem Bereich zwischen 0,1 mm und 0,5 mm, vorzugsweise in einem Bereich zwischen 0,2 mm und 0,4 mm, bevorzugt in einem Bereich von 0,3 mm.

Weiterhin wird vorgeschlagen, dass der Anbindungsbereich zumindest eine Schweißnaht, insbesondere eine einzelne Schweißnaht, mit einem einzelnen Anfangspunkt und einem einzelnen Endpunkt aufweist. Vorzugsweise wird der Anbindungsbereich insbesondere lateral von der zumindest einen Schweißnaht aufgespannt. Über die Schweißnaht wird eine stoffschlüssige Verbindung zwischen dem Zellpol und dem Stromableiter hergestellt. Die Schweißnaht wird insbesondere über ein Laserschweißverfahren hergestellt. Insbesondere sind beide Zellpole der Akkuzelle über ein Laserschweißverfahren stoffschlüssig mit jeweils einem Stromableiter verbunden. Es ist allerdings auch denkbar, dass nur ein Zellpol der Akkuzelle über das Laserschweißverfahren und der andere Zellpol mittels eines anderen Verfahrens mit einem Stromableiter verbunden ist. Das andere Verfahren kann ebenfalls über eine stoffschlüssige Verbindung oder über eine kraft- und/oder formschlüssige Verbindung realisiert werden. Insbesondere unterscheidet sich der Anfangspunkt von dem Endpunkt der Schweißnaht.

Zudem wird vorgeschlagen, dass die Schweißnaht über zumindest 90 % ihrer Länge, insbesondere ihrer Länge, eine im Wesentlichen gleichmäßige Breite aufweist. In diesem Zusammenhang soll unter einer Breite der Schweißnaht insbesondere die Breite der Schweißnaht auf der Oberfläche des Stromableiters, auf der ein Laserstrahl eines Lasers in den Stromableiter eindringt verstanden werden. Vorteilhaft kann dadurch eine besonders gute Verbindung hergestellt werden. Unter einer im Wesentlichen gleichmäßigen Breite soll insbesondere eine Variation der Breite um höchstens 50 %, vorzugsweise höchstens 25 %, bevorzugt höchstens 15%, entlang der Länge der Schweißnaht verstanden werden. Alternativ zu der Breite der Schweißnaht auf der Oberfläche ist auch denkbar, dass es sich bei der Breite der Schweißnaht um den Bereich an der Grenzfläche zwischen dem Stromableiter und dem Zellpol handelt, der durch das Laserschweißverfahren miteinander stoffschlüssig verbunden wird.

Des Weiteren wird vorgeschlagen, dass die Schweißnaht sich und/oder eine weitere Schweißnaht nicht berührt und/oder kreuzt. Vorteilhaft kann dadurch sichergestellt werden, dass der Zellpol nicht beschädigt wird. Insbesondere berührt sich die Schweißnaht und/oder die weitere Schweißnaht in den Bereichen nicht, in denen sie im Wesentlichen parallel zu sich oder zueinander, beziehungsweise mit derselben Krümmung zu sich oder zueinander, insbesondere konzentrisch, verlaufen.

Weiterhin wird vorgeschlagen, dass die Schweißnaht um weniger als ihrer vierfachen Breite, bevorzugt ihrer zweifachen Breite, insbesondere ihrer Breite, vorzugsweise ihrer halben Breite, von sich oder von einer weiteren Schweißnaht beabstandet ist. Vorteilhaft kann dadurch sichergestellt werden, dass der Zellpol nicht beschädigt wird.

Zudem wird vorgeschlagen, dass der Anbindungsbereich zumindest 40 %, insbesondere zumindest 60 %, vorzugsweise zumindest 80 %, einer Stirnfläche des Zellpols einnimmt. Vorteilhaft kann dadurch die Verbindung zwischen Zellpol und Stromableiter verbessert werden. Der aufgespannte Bereich ist vorteilhaft auf der Oberfläche des Stromableiters, auf der ein Laserstrahl des Lasers in den Stromableiter eindringt, angeordnet.

Alternativ oder zusätzlich wird vorgeschlagen, dass der Anbindungsbereich zu zumindest 20 %, insbesondere 35 %, vorzugsweise 50 %, von der zumindest einen Schweißnaht bedeckt ist. Vorteilhaft kann dadurch die Verbindung zwischen Zellpol und Stromableiter weiter verbessert werden.

Des Weiteren wird vorgeschlagen, dass die Schweißnaht im Wesentlichen spiralförmig, wellenförmig, mäanderförmig oder im Wesentlichen geradlinig ist.

Zudem betrifft die Erfindung ein Laserschweißverfahren zur Verbindung einer Akkuzelle mit einem Stromableiter, der aus Kupfer ausgebildet ist. Es wird vorgeschlagen, dass eine Schweißnaht durch eine geradlinige und/oder gekrümmte Relativbewegung einer die Akkuzelle und den Stromableiter umfassenden Akkupackvorrichtung und eines Laserstrahls zueinander gebildet wird. Vorteilhaft kann durch eine derartige Bewegung eine effektive Verbindung zwischen der Akkuzelle und dem Stromableiter realisiert werden.

Die Relativbewegung kann insbesondere durch eine Ablenkung des Laserstrahls mittels einer Optik und/oder durch eine Bewegung der Akkupackvorrichtung relativ zum Laser erfolgen.

Zudem ist denkbar, dass die Relativbewegung zusätzlich moduliert, insbesondere periodisch moduliert, wird. Durch die zusätzliche Modulation der geradlinigen und/oder gekrümmten Relativbewegung wird der bestrahlte Bereich in seiner Breite über den Durchmesser des Laserstrahls hinaus vergrößert, was zu einer besseren Wärmeverteilung während des Laserschweißverfahrens und zu einer breiteren Schweißnaht führt. Die Modulation erfolgt vorzugsweise über die Optik eines Lasers. Bevorzugt wird eine rotatorische Bewegung in Form einer Kreisbewegung auf eine lineare Relativbewegung moduliert, was zu einer spiralförmigen Bewegung um die lineare Relativbewegung führt.

Des Weiteren wird vorgeschlagen, dass die Relativbewegung mit einer Frequenz im Bereich von 50 bis 2000 Hz, insbesondere im Bereich von 100 bis 400 Hz, moduliert, insbesondere rotatorisch moduliert, wird. Die Amplitude der Modulation beträgt zwischen 10 % der Breite der Schweißnaht bis 400 % der Breite der Schweißnaht. Vorteilhaft kann dadurch sichergestellt werden, dass keine lokale Überhitzung des Stromableiters oder der Akkuzelle durch die Laseranregung entsteht. Alternativ zu der rotatorischen Modulation ist beispielsweise auch eine lineare oder eine sinusförmige Modulation denkbar, die amplitudenmoduliert oder frequenzmoduliert ausgebildet sein kann.

Weiterhin wird vorgeschlagen, dass eine Leistung des Lasers zwischen einem Anfangspunkt der Schweißnaht und einem Endpunkt der Schweißnaht variiert wird, insbesondere abgesenkt wird. Vorteilhaft kann dadurch sichergestellt werden, dass die Erwärmung der Materialien während des Laserschweißvorgangs keinen störenden Einfluss auf die Schweißnahtbildung hat.

Insbesondere wird die Leistung des Lasers während der Herstellung einer Schweißnaht um zumindest 5 %, vorzugsweise um zumindest 10 %, bevorzugt um zumindest 20 %, abgesenkt. Die Absenkung der Laserleistung kann proportional, überproportional und/oder stufenweise erfolgen.

Alternativ oder zusätzlich wird vorgeschlagen, dass eine Schweißgeschwindigkeit derart gewählt ist, dass eine gute Schweißnaht mit einer Variation von bis zu 10 %, insbesondere bis zu 20%, vorzugsweise bis zu 30 %, einer maximalen Leistung des Lasers hergestellt wird. Vorteilhaft kann dadurch ein besonders stabiler Prozess realisiert werden. Zudem wird vorgeschlagen, dass die Schweißgeschwindigkeit in einem Bereich zwischen 0,1 m/s und 3,0 m/s liegt.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Akkupacks;
- Fig. 2: eine weitere perspektivische Ansicht des Akkupacks;
- Fig. 3a: eine Draufsicht auf eine Schweißnaht;
- Fig. 3b: eine Schnitt durch die Schweißnaht gemäß Fig. 3a;
- Fig. 4: eine perspektivische Ansicht einer alternativen Ausführungsform des Akkupacks;
- Fig. 5: ein Flussdiagram eines erfindungsgemäßen Laserschweißverfahrens;
- Fig. 6: ein Diagramm mit Verfahrensparametern.

### Beschreibung der Ausführungsbeispiele

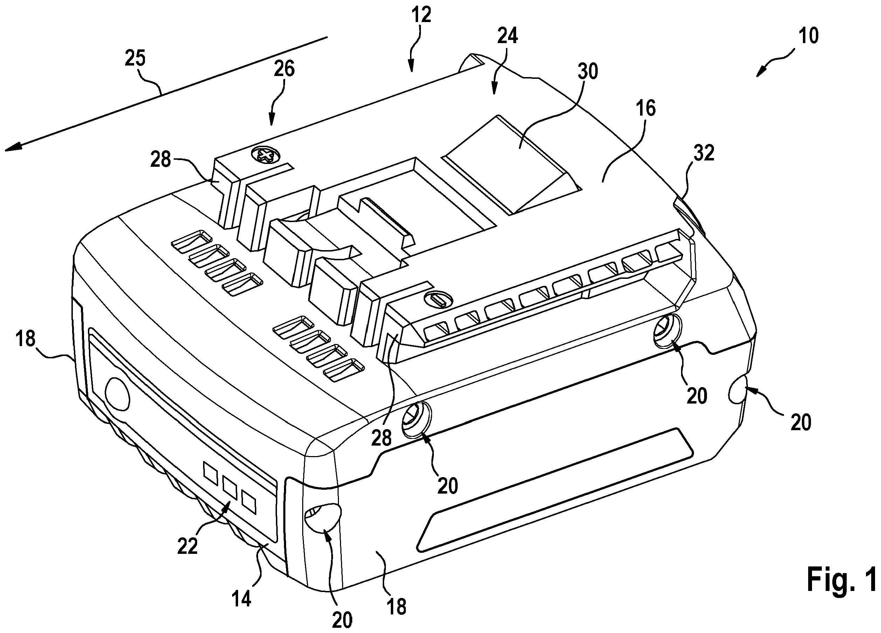

In Fig. 1 ist in einer perspektivischen Ansicht ein Akkupack 10 gezeigt. Der Ackupack 10 ist beispielhaft als ein Handwerkzeugmaschinenakkupack ausgebildet und derart elektrisch und mechanisch mit einer Handwerkzeugmaschine (nicht dargestellt) verbindbar ausgebildet, dass die Handwerkzeugmaschine über den Akkupack 10 mit Energie versorgt werden kann. Der Akkupack weist ein Gehäuse 12 auf, das mehrteilig ausgebildet ist. Das Gehäuse 12 weist auf seiner Unterseite einen Grundkörper 14, auf seiner Oberseite ein Schnittstellengehäuseteil 16 und an seinen Seitenflächen zwei gegenüberliegende Seitenwände 18 auf. Die Gehäuseteile 14, 16, 18 sind über Schraubverbindungen 20 miteinander verbunden. Auf der Vorderseite des Akkupacks 10 ist eine Ladezustandsanzeige 22 angeordnet, über die der Ladezustand des Akkupacks 10 anzeigbar ist. Die Ladezustandsanzeige 22 ist im Gehäuse 12, insbesondere im Grundkörper 14, integriert. Das Gehäuse 12, insbesondere das Schnittstellengehäuseteil 16, umfasst eine mechanische Schnittstelle 24 und eine elektrische Schnittstelle 26. Die mechanische Schnittstelle 24 und die elektrische Schnittstelle 26 sind zum lösbaren Anbringen und zur elektrischen Verbindung des Akkupacks 10 an einer Handwerkzeugmaschine oder an einem Ladegerät (nicht dargestellt) ausgebildet, die jeweils eine korrespondierende mechanische und elektrische Schnittstelle aufweisen.

Der Akkupack 10 ist beispielhaft als Schiebeakkupack ausgebildet. Beim Anbringen des Akkupacks 10 werden Aufnahmemittel, z. B. Führungsnuten und Führungsrippen, der Handwerkzeugmaschine oder des Ladegerätes zur Aufnahme der korrespondierenden Führungselemente 28 des Akkupacks 10 mit diesen in Eingriff gebracht, wobei der Akkupack 10 in einer Einschubrichtung 25 entlang der Aufnahmemittel eingeführt und die mechanische Schnittstelle 24 des Akkupacks 10 in die korrespondierende mechanische Schnittstelle der Handwerkzeugmaschine oder die korrespondierende Schnittstelle des Ladegerätes eingeschoben wird. Zur Verriegelung des Akkupacks 10 mit der Handwerkzeugmaschine oder mit dem Ladegerät weist die mechanische Schnittstelle 24 ein Verriegelungselement 30 auf. Das Verriegelungselement 30 ist als federbelastetes Rastelement ausgebildet, das schwenkbar im Gehäuse 12 des Akkupacks gelagert ist. Die Verriegelung erfolgt über ein Einschieben des Akkupacks 10 entlang der Einschubrichtung 25, wobei das Verriegelungselement 30 am Ende der Einschubbewegung in eine Hinterschnittstellung einrastet. Zum Lösen der Verriegelung weist die mechanische Schnittstelle 24 ein Betätigungselement 32 auf, das mit dem Verriegelungselement 30 beweglich gekoppelt ist. Durch eine Betätigung des Betätigungselements 32 bewegt sich das Verriegelungselement 30 einwärts in das Gehäuse 12 des Akkupacks 10 hinein und die Verriegelung zwischen dem Akkupack 10 und der Handwerkzeugmaschine bzw. dem Ladegerät wird gelöst.

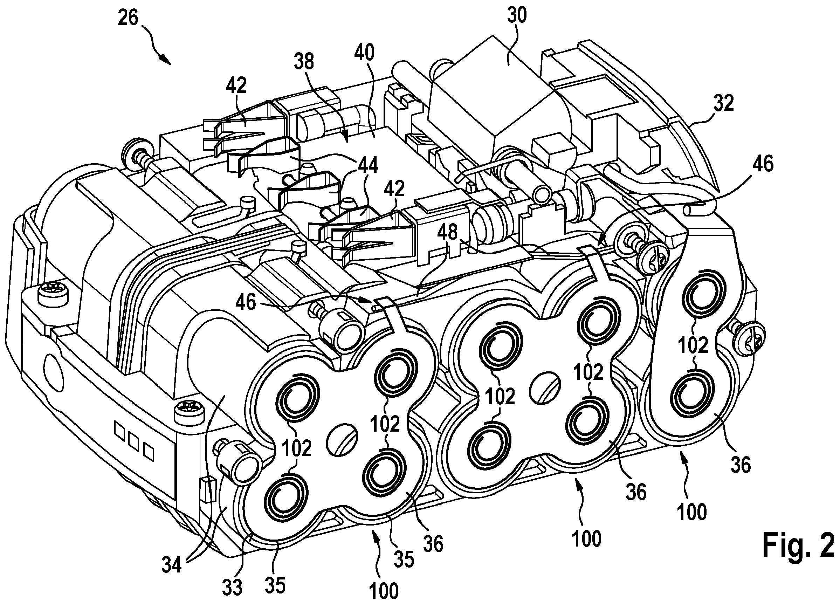

In Fig. 2 ist der Akkupack 10 ohne das Schnittstellengehäuseteil 16 und ohne die Seitenwände 18 gezeigt. Der Grundkörper 14 des Gehäuses 12 weist einen Zellenhalterbereich auf. Im Zellenhalterbereich ist zumindest eine Akkuzellen 34 aufgenommen, wobei der Akkupack 10 in dieser Ausführungsform beispielhaft zehn parallel oder seriell verschaltete Akkuzellen 34 aufweist. Alternativ ist auch denkbar, dass die Akkuzellen 34 mittels beispielsweise Papphülsen zur Isolation der Akkuzellen 34 untereinander verbunden sind. Die Akkuzellen 34 sind zylinderförmig ausgebildet und weisen an ihren Stirnflächen 33 elektrische Zellpole 35 auf.

Die Verbindung der Akkuzellen 34 untereinander wird über als Zellverbinder ausgebildete Stromableiter 36 realisiert. Die Akkuzellen 34 sind mit den Stromableitern 36 über jeweils einen Anbindungsbereich 104 stoffschlüssig verbunden. Die stoffschlüssig mit dem Stromableiter 36 verbundene Akkuzelle 34 bildet eine erfindungsgemäße Akkupackvorrichtung 100. In den Anbindungsbereichen 104 ist jeweils eine einzelne Schweißnaht 102 angeordnet, die über ein Laserschweißverfahren hergestellt wird. Die Stromableiter 36 sind zur elektrischen Verschaltung der Akkuzellen 34 untereinander in Parallel- und/oder Reihenschaltung ausgebildet. In der dargestellten Ausführungsform sind jeweils zwei oder vier Ackuzellen 34 über Stromableiter 36 miteinander verbunden. Ferner ist zu erkennen, dass die einzelnen Akkuzellen 34 zur mechanischen Fixierung in dem Zellenhalterbereich des Grundkörper 14 beabstandet voneinander aufgenommen sind. Der Zellenhalterbereich dient neben der Fixierung der Akkuzellen 34 in dem Gehäuse 12 auch der Kühlung der Akkuzellen 34 und wird aus einem wärmeleitfähigen Material, beispielsweise Aluminium oder einem gut wärmeleitenden Kunststoff, gebildet. Des Weiteren weist der Zellenhalterbereich hülsenartige Isolierwandungen auf, so dass die einzelnen Akkuzellen 34 separiert werden und eine elektrische Isolierung der einzelnen Akkuzellen 34 voneinander gewährleistet werden kann. Der Wärmeübergangswiderstand zwischen den benachbarten Akkuzellen 34 und zwischen den Akkuzellen 34 und dem Zellenhalterbereich ist dabei möglichst gering, so dass die von den Akkuzellen 34 erzeugte Verlustwärme gut nach außen abgeführt und eine Überhitzung des Akkupacks 10 im Inneren verhindert werden kann.

Oberhalb des Zellenhalterbereichs, insbesondere im Bereich zwischen dem Grundkörper 14 und dem Schnittstellengehäuseteil 16, ist eine Elektronik 38 angeordnet. Die Elektronik 38 umfasst eine Leiterplatte 40. Die Elektronik 38 ist mit der Ladezustandsanzeige 22 verbunden. Auf der Leiterplatte 40 sind elektrische Kontaktelemente 42, die zum Laden und Entladen des Akkupacks 10 vorgesehen sind, und weitere Kontaktelemente 44, die zur Übermittlung von Zustandsinformationen, wie beispielsweise dem Ladezustand oder die Temperatur des Ackupacks 10, an die Handwerkzeugmaschine oder das Ladegerät ausgebildet sind, angeordnet. Die elektrischen Kontaktelemente 42 und die weiteren Kontaktelemente 44 sind der elektrischen Schnittstelle 26 zugeordnet. Die elektrischen Kontaktelemente 42 sind mit der Elektronik 38 und mit den Akkuzellen 34 verbunden. Die elektrische Verbindung der elektrischen Kontaktelemente 42 mit den Akkuzellen 34 erfolgt über als Lötstellen ausgebildete Kontaktstelle 46, an denen die Akkuzellen 34 über die Stromableiter 36 mit als Drähten ausgebildete elektrische Verbindungselemente 48 verlötet sind. Alternativ ist auch ein Verschweißen des Stromableiters 36 mit dem elektrischen Verbindungselement 48 denkbar. Die Lötstellen 46 sind zwischen der Elektronik 38 und den Akkuzellen 34 angeordnet.

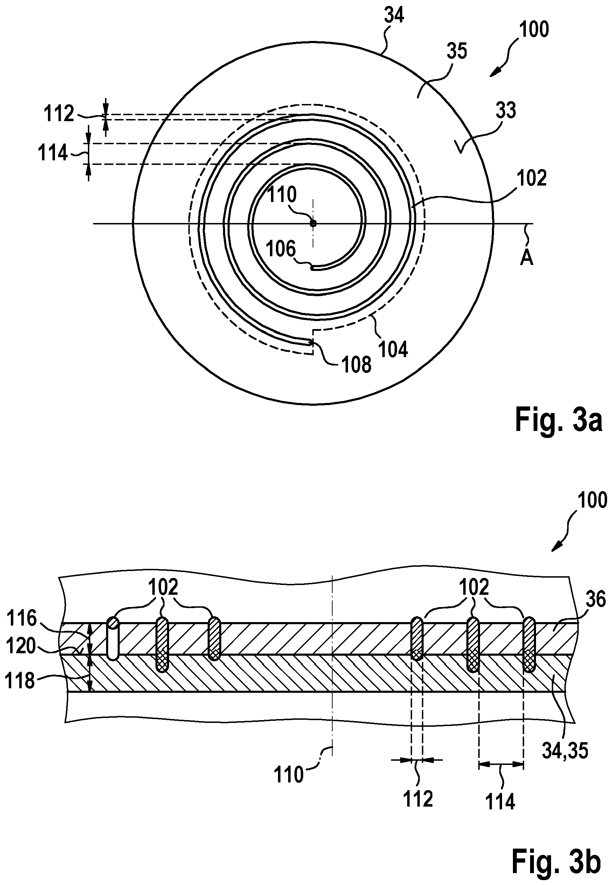

In Fig. 3a ist die Schweißnaht 102 aus Fig. 2 in einer Draufsicht gezeigt. Die Schweißnaht 102 erstreckt sich spiralförmig auf der Oberfläche des Stromableiters 36. Der Anbindungsbereich 104 wird aufgespannt durch die Schweißnaht 102, insbesondere durch die Außenkontur der Schweißnaht 102. Die Schweißnaht 102 besitzt einen einzelnen Anfangspunkt 106, an welchem das Laserschweißverfahren gestartet wird, und einen einzelnen Endpunkt 108, an welchem das Laserschweißverfahren beendet wird, auf. Der Anfangspunkt 106 weist dabei einen kleineren Abstand zum Zentrum 110 des Anbindungsbereichs 104 auf, als der Endpunkt 108. Insbesondere ist der Anfangspunkt 106 im innenliegenden Bereich der spiralförmigen Schweißnaht 102 und der Endpunkt 108 im außenliegenden Bereich der spiralförmigen Schweißnaht 102 angeordnet. Die Breite 112 der Schweißnaht 102 ist über ihre Länge im Wesentlichen gleichmäßig ausgebildet. Insbesondere vergrößert sich die Breite 112 der Schweißnaht zwischen dem Anfangspunkt 106 und dem Endpunkt 108 um weniger als 25 %, beispielhaft um ca. 20 %. Die spiralförmige Schweißnaht 102 weist beispielhaft drei Spiralwindungen auf, es sind allerdings auch mehr oder weniger spiralförmige Windungen denkbar. Die Spiralwindungen verlaufen im Wesentlichen parallelkurvenförmig und zueinander beabstandet. Der Abstand 114 zwischen den Spiralwindungen beträgt ca. die zweifache Breite 112 der Schweißnaht 102. Die Breite 112 der Schweißnaht 102 entspricht im Wesentlichen 10 % des Abstands zwischen dem Zentrum des Anbindungsbereichs 104 und dem Endpunkt 108 der Schweißnaht 102. Der Anfangspunkt 106 ist im Wesentlichen um ca. 40 % des Abstands zwischen dem Zentrum 110 des Anbindungsbereichs 104 und dem Endpunkt 108 der Schweißnaht 102 von dem Zentrum 110 beabstandet. Vorteilhaft nimmt dadurch die Schweißnaht 102 flächenmäßig einen Bereich von über 20 % des Anbindungsbereichs 104 ein. Des Weiteren nimmt der Anbindungsbereich 104 flächenmäßigen einen Bereich von über 40 % der Stirnfläche 33 des Zellpols 35 ein.

In Fig. 3b ist ein Querschnitt entlang der in Fig. 3a eingezeichneten Ebene A gezeigt. Die Dicke 116 des Stromableiters 36 entspricht im Wesentlichen der Wandstärke 118 des Zellpols 35. Insbesondere beträgt die Dicke 116 des Stromableiters 36 und die Wandstärke des Zellpols 35 jeweils im Wesentlichen 0,3 mm. Somit beträgt das Verhältnis zwischen der Wandstärke 118 des Zellpols 35 und der Dicke 116 des Stromableiters 36 im Wesentlichen 1,0. Der Stromableiter 36 ist aus einem Elektrolytkupfer mit einem Kupferanteil von 99,5 % ausgebildet, der Zellpol ist aus Edelstahl oder Tiefziehstahl ausgebildet. In Fig. 3b sind zudem Querschnitte an sechs verschiedenen Stellen der Schweißnaht 102 gezeigt. Der Stromableiter 36 und der Zellpol 35 werden lokal durch den Laserstrahl aufgeheizt, so dass eine Schmelze gebildet wird, die die Schweißnaht 102 bildet. Eine gute Schweißnaht 102 wird dadurch charakterisiert, dass im Bereich einer Grenzfläche 120 zwischen dem Stromableiter 36 und dem Zellpol 35 sich das geschmolzene Material des Stromableiters 36 mit dem geschmolzenen Material des Zellpols verbindet. Der Bereich der Schweißnaht 102, in welchem sich der Stromableiter 36 und der Zellpol 35 durch das Laserschweißverfahren stoffschlüssig miteinander verbinden ist mit einer sich kreuzenden Schraffur gezeichnet. Zwingend vermieden werden soll ein Durchbruch des Zellpols 35, der in der Regel zu einem Ausfall der Akkuzelle 34 führt. Der vom Zentrum 110 am weitesten entfernte Querschnitt der Schweißnaht 102 weist beispielhaft einen hohen Auswurf an Stromableitermaterial auf, was ebenfalls vermieden werden soll.

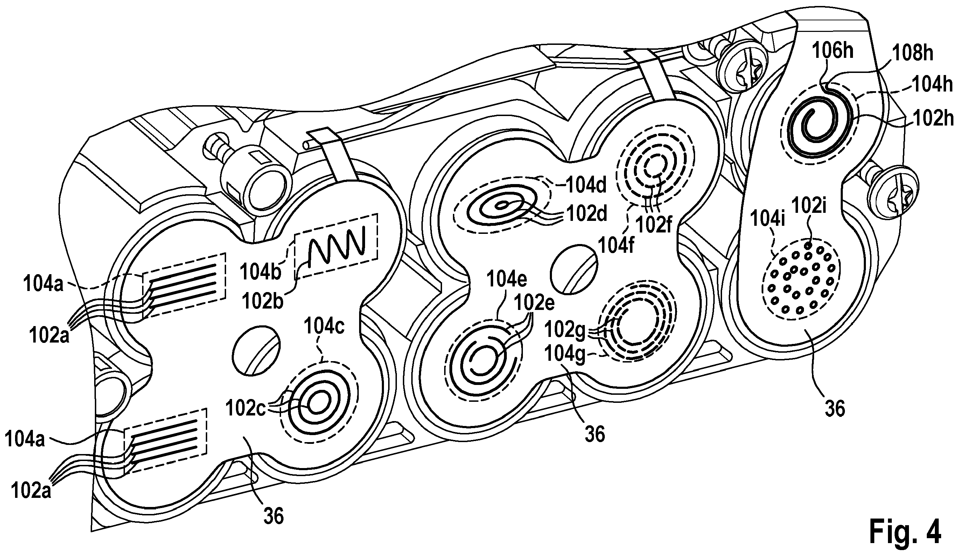

In Fig. 4 ist beispielhaft ein Akkupack 10 mit einer Akkupackvorrichtung 100 mit alternativen Ausführungsformen der Schweißnaht 102 gezeigt.

Die Schweißnaht 102a ist beispielhaft geradlinig ausgebildet. Insbesondere sind im Anbindungsbereich 104a vier geradlinige Schweißnähte 102a angeordnet, die parallel zueinander verlaufen. Die Schweißnähte 102a sind insbesondere beabstandet zueinander ausgebildet. Die Anfangspunkte 106a und die Endpunkte 108a sind beispielhaft auf selber Höhe ausgebildet, wobei es auch denkbar ist, dass die Anfangspunkte 106a und die Endpunkte 108a nicht auf selber Höhe liegen. Die Schweißnähte 102a können wie gezeigt dieselbe Länge aufweisen, eine Variation der Länge ist allerdings auch denkbar.

Die Schweißnaht 102b ist beispielhaft wellenförmig ausgebildet. Die Amplitude und/oder die Frequenz der Wellenform können konstant oder variierend ausgebildet sein.

Die Schweißnaht 102c ist beispielhaft aus einem geschlossenen runden Kreis ausgebildet. Insbesondere sind im Anbindungsbereich 104c drei konzentrische kreisförmige Schweißnähte 102c mit jeweils unterschiedlichen Radien angeordnet.

Die Schweißnaht 102d ist beispielhaft ovalförmig, insbesondere elliptisch, ausgebildet. Insbesondere sind im Anbindungsbereich 104d drei Schweißnähte 102d angeordnet, die voneinander beabstandet sind.

Die Schweißnaht 102e ist aus einem nicht geschlossenen, insbesondere c-förmigen beispielhaft als Kreis ausgebildeten Oval, ausgebildet. Im Anbindungsbereich 104e sind drei Schweißnähte 102e angeordnet, deren Öffnung in unterschiedliche Richtungen weisen.

Die Schweißnaht 102f ist kreisbogenförmig ausgebildet. Insbesondere bilden zumindest drei Schweißnähte 102f einen unterbrochenen Kreis. Im Anbindungsbereich 104f sind zwei unterbrochene Kreise dargestellt, die einen unterschiedlichen Durchmesser aufweisen.

Die Schweißnaht 102g ist ovalförmig ausgebildet. Insbesondere bilden die im Anbindungsbereich 104g angeordneten Schweißnähte eine unterbrochene Spiralform.

Im Anbindungsbereich 104h ist eine einzelne Schweißnaht 102h angeordnet. Sowohl der Anfangspunkt 106h als auch der Endpunkt 108h der Schweißnaht ist im äußeren Bereich des Anbindungsbereichs 104h angeordnet. Die Schweißnaht 102h erstreckt sich spiralförmig in Richtung des Zentrums der Anbindungsbereichs 104h und spiralförmig wieder aus dem Zentrum heraus.

Im Anbindungsbereich 104i sind kreisförmige Schweißnähte 102i spiralförmig angeordnet.

In den Figuren 2 und 4 ist zu erkennen, dass sich die Schweißnähte 102 a-i nicht berühren und/oder kreuzen.

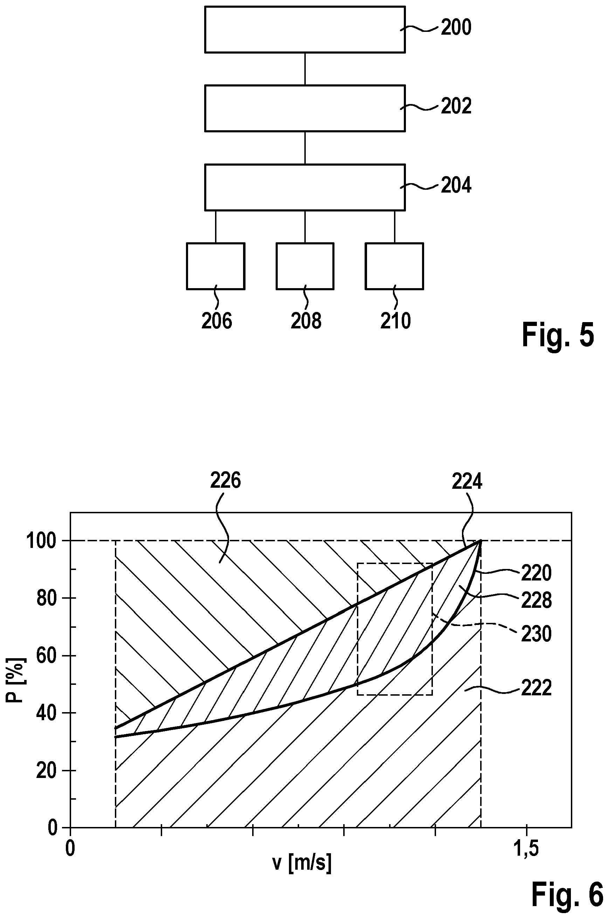

In Fig. 5 ist das Laserschweißverfahren zur Verbindung einer Akkuzellen 34 mit einem Stromableiter 36, der aus Kupfer ausgebildet ist, anhand eines Flussdiagramms gezeigt. In einem ersten Schritt 200 wird der Stromableiter 36 auf die Stirnfläche 33 des Zellpols 35 der Akkuzelle 34 positioniert. In einem weiteren Schritt 202 wird eine Optik eines Lasers und/oder die Position der Akkupackvorrichtung 100 derart eingestellt, dass ein Fokus des Lasers im Bereich des Anfangspunkt 106 der herzustellenden Schweißnaht 102 liegt.

In einem weiteren Schritt 204 wird der Laser eingeschaltet und die Oberfläche des Stromableiters 36 durch den Laser bestrahlt. Die Bestrahlung kann senkrecht zur Oberfläche des Stromableiters 36 erfolgen. Vorzugsweise wird die Oberfläche unter einem Winkel in einen gewissen Bereich, beispielsweise 20 % Abweichung von einer senkrechten Anordnung, bestrahlt. Insbesondere ist der Laser als Infrarotlaser mit einer Leistung von mehreren hundert Watt oder einigen Kilowatt, ausgebildet. Zur präzisen Strukturierung ist die Spotgröße des Lasers, die einem Durchmesser des Laserstrahls auf der Oberfläche des Stromableiters 36 entspricht, insbesondere unter 100 µm groß.

Der Laserstrahl und die Akkupackvorrichtung 100 werden in einem Schritt 206 relativ zueinander derart bewegt, dass eine spiralförmige Schweißnaht 102 (siehe Fig. 3a) entsteht. Die Relativbewegung zueinander erfolgt insbesondere mit einer im Wesentlichen konstanten Schweißgeschwindigkeit in einem Bereich zwischen 0,1 m/s und 0,3 m/s. Die Relativbewegung erfolgt von dem Anfangspunkt 106 der Schweißnaht 102 bis zum Endpunkt 108 der Schweißnaht. Die Relativbewegung erfolgt insbesondere über eine gekrümmte Bewegung. Bei der Herstellung der Schweißnaht verlängert sich die Schweißnaht 102 in Abhängigkeit von der Schweißgeschwindigkeit.

In einem zum Schritt 206 alternativen oder zusätzlichen parallelen Schritt 208 wird die Relativbewegung zusätzlich derart moduliert, dass die Breite der Schweißnaht 102 vergrößert wird. Vorteilhaft kann dadurch eine besonders gleichmäßige Erwärmung des Stromableiters 36 bzw. des Zellpols 35 gewährleistet werden. Insbesondere hat die Modulation der Relativbewegung keinen Einfluss auf die Schweißgeschwindigkeit. Die Modulation ist vorzugsweise als eine kreisförmige Bewegung mit einer Frequenz von mehreren hundert Hz ausgebildet sein. Insbesondere ist der Radius der kreisförmigen Modulation kleiner als der dreifache Durchmesser, vorzugsweise kleiner als der zweifache Durchmesser, bevorzugt kleiner als der Durchmesser, der Spotgröße des Lasers.

In einem weiteren zu den Schritten 206, 208 parallelen Schritt 210 wird die Leistung des Lasers während der Relativbewegung stetig abgesenkt. Mit zunehmender Bestrahlungsdauer der Akkupackvorrichtung 100 erwärmen sich die Materialien derart, dass die Leistung, ab der ein Schweißfehler in der Schweißnaht mit hoher Wahrscheinlichkeit auftritt, im Vergleich zum nicht erwärmten Zustand deutlich abnimmt. Vorteilhaft wird durch die Absenkung der Laserleistung eine im Wesentlichen gleichmäßige Breite der Schweißnaht ohne Schweißfehler gewährleistet.

In Figur 6 sind in einem Diagramm die Verfahrensparameter Laserleistung und Schweißgeschwindigkeit gegeneinander aufgetragen. Die Kurve 220 stellt die minimalen Verfahrensparameter dar, ab denen eine gute Schweißnaht 102 hergestellt werden kann, die den Stromableiter 36 mit dem Zellpol 35 stoffschlüssig verbindet. In dem Bereich 222 unterhalb der Kurve 220 sind die Verfahrensparameter angeordnet, bei denen aufgrund der zu geringen Laserleistung oder aufgrund der zu hohen Schweißgeschwindigkeit die Schweißnaht 102 an der Grenzfläche 120 zwischen Stromableiter 36 und Akkuzelle 34 nicht genügen erwärmt wird, um eine stoffschlüssige Verbindung im Bereich der Grenzfläche 120 zu erzeugen. Die Kurve 224 stellt die maximalen Verfahrensparameter dar, bis zu welchen eine gute Schweißnaht 102 herstellbar ist. Im Bereich 226 oberhalb der Kurve 224 ist die Erwärmung der Akkupackvorrichtung 100 derart hoch, dass mit einer hohen Wahrscheinlichkeit Stromableitermaterial abgetragen wird und Risse und/oder Poren entstehen. Des Weiteren kann es auch passieren, dass Risse und/oder Poren im Zellpol 35 entstehen oder die Laseranregung in die Akkuzelle 34 eindringt und damit die Akkuzelle 34 beschädigt wird.

Im Bereich 228 zwischen den beiden Kurven 220, 224 sind die Kombinationen von Verfahrensparametern angeordnet, durch die eine gute Schweißnaht 102 hergestellt werden kann. Zur Herstellung einer guten Schweißnaht 102 wird vorzugsweise eine Schweißgeschwindigkeit gewählt, bei der der Abstand zwischen der minimalen Laserleistung und der maximalen Laserleistung maximal ist, wie beispielhaft in dem Bereich 230. Bei einer Schweißgeschwindigkeit im Bereich 230 kann die Laserleistung um über 20 % der maximalen Laserleistung variieren, ohne dass die Schweißnaht 102 Fehler aufweist oder keine stoffschlüssige Verbindung entsteht. Insbesondere entsteht im Bereich 230 eine gute Schweißnaht, in der im Wesentlichen keine kritischen Fehler auftreten. Unter einem kritischen Fehler soll in diesem Kontext insbesondere ein Fehler verstanden werden, bei dem die Funktionsfähigkeit der Akkupackvorrichtung verringert oder dauerhaft nicht gewährleistet ist. Durch die Wahl einer Schweißgeschwindigkeit in diesem Bereich 230 kann vorteilhaft ein besonders konstantes Laserschweißverfahren realisiert werden, bei dem auch bei Schwankungen in der Laserleistung eine gute Schweißnaht 102 hergestellt wird.

## Patentansprüche

1. Akkupackvorrichtung mit zumindest einer Akkuzelle (34), die zumindest einen Zellpol (35) aufweist, mit einem Stromableiter (36), wobei der Zellpol (35) mit dem Stromableiter (36) in einem Anbindungsbereich (104) stoffschlüssig verbunden ist, wobei der Anbindungsbereich (104) zumindest eine Schweißnaht (102) mit einem einzelnen Anfangspunkt (106) und einem einzelnen Endpunkt (108) aufweist, wobei die Schweißnaht über zumindest 90 % ihrer Länge, insbesondere ihrer gesamten Länge, eine gleichmäßige Breite (112) aufweist, wobei die Schweißnaht (102) sich und/oder eine weitere Schweißnaht nicht berührt und/oder kreuzt, wobei die Akkupackvorrichtung je Akkuzelle (34) eine einzelne spiralförmige Schweißnaht (102) oder zumindest zwei parallele, insbesondere geradlinig parallele, Schweißnähte (102a) aufweist.

2. Akkupackvorrichtung nach Anspruch 1, **dadurch gekennzeichnet, dass** ein Verhältnis einer Wandstärke (118) des Zellpols (35) und einer Dicke des Stromableiters (36) maximal 2,0 ist, und der Stromableiter (36) aus Kupfer ausgebildet ist

3. Akkupackvorrichtung nach Anspruch 2, **dadurch gekennzeichnet, dass** das Verhältnis zwischen der Wandstärke (118) des Zellpols (35) und der Dicke (116) des Stromableiters (36) maximal 1,5, vorzugsweise maximal 1,0, bevorzugt maximal 0,8, ausgebildet ist.

4. Akkupackvorrichtung nach einem der vorhergehenden Ansprüche, **dadurch gekennzeichnet, dass** der Anbindungsbereich (104) eine einzelne Schweißnaht (102) aufweist.

5. Akkupackvorrichtung nach einem der vorhergehenden Ansprüche, **dadurch gekennzeichnet, dass** die Schweißnaht (102) um weniger als ihrer vierfachen Breite (112), vorzugsweise um weniger als ihrer zweifachen Breite (112), insbesondere ihrer Breite (112), vorzugsweise ihrer halben Breite (112), von sich oder von einer weiteren Schweißnaht beabstandet ist.

6. Akkupackvorrichtung nach einem der vorhergehenden Ansprüche, **dadurch gekennzeichnet, dass** der Anbindungsbereich (104) zumindest 40 %, insbesondere 60 %, vorzugsweise 80 %, einer Stirnfläche (33) des Zellpols (35) einnimmt.

7. Akkupackvorrichtung nach Anspruch 6, **dadurch gekennzeichnet, dass** der Anbindungsbereich (104) zu zumindest 20 %, insbesondere zumindest 35 %, vorzugsweise zumindest 50 %, von der zumindest einen Schweißnaht (102) bedeckt ist.

8. Akkupack, insbesondere Handwerkzeugmaschinenakkupack, mit einer Akkupackvorrichtung (100) nach einem der vorhergehenden Ansprüche.

9. Herstellungsverfahren für eine Akkupackvorrichtung nach einem der Ansprüch 1 bis 7 oder für einen Akkupack nach Anspruch 8, umfassend ein Laserschweißverfahren zur Verbindung der Akkuzelle (34) mit dem Stromableiter (36), wobei der Stromableiter (36) aus Kupfer ausgebildet ist, wobei die Schweißnaht (102) durch eine geradlinige und/oder gekrümmte Relativbewegung einer die Akkuzelle (35) und den Stromableiter (36) umfassenden Akkupackvorrichtung (100) und eines Laserstrahls zueinander gebildet wird.

10. Herstellungsverfahren nach Anspruch 9, wobei die Relativbewegung mit einer Frequenz im Bereich von 50 bis 2000 Hz, insbesondere im Bereich von 100 bis 400 Hz moduliert, insbesondere rotatorisch moduliert, wird.

11. Herstellungsverfahren nach Anspruch 9 oder 10, wobei eine Leistung eines Lasers zwischen einem Anfangspunkt (106) der Schweißnaht (102) und einem Endpunkt (108) der Schweißnaht (102) variiert wird, insbesondere abgesenkt wird.

12. Herstellungsverfahren nach einem der Ansprüche 9 bis 11, wobei eine Schweißgeschwindigkeit derart gewählt ist, dass eine gute Schweißnaht (102) mit einer Variation von bis zu 10 %, insbesondere bis zu 20 %, vorzugsweise bis zu 30 % einer maximalen Leistung des Lasers hergestellt wird.

13. Herstellungsverfahren nach Anspruch 12, wobei die Schweißgeschwindigkeit in einem Bereich zwischen 0,1 m/s und 3,0 m/s liegt.
